# EUROPÄISCHE PATENTANMELDUNG

(11) **EP 3 251 500 A1**
(43) Veröffentlichungstag der Anmeldung: **06.12.2017**
(21) Anmeldenummer: 17174347.9
(22) Anmeldetag: 02.06.2017
(51) Int. Cl.: A01K 1/01

(54) **KATZENTOILETTE, KATZENTOILETTEVORRICHTUNG FÜR DIE KATZENTOILETTE SOWIE EIN SYSTEM AUS KATZENTOILETTE UND KATZENTOILETTENVORRICHTUNG**

(30) Priorität: 03.06.2016 CH 7122016
(71) Anmelder: Trottmann, Christian, 8309 Birchwil (CH)
(72) Erfinder: Trottmann, Christian, 8309 Birchwil (CH)
(74) Vertreter: Schneider Feldmann AG Patent- und Markenanwälte

(57) **Zusammenfassung**

Bei einer Katzentoilette (3) umfassend zumindest eine Wanne (11) geeignet zur Aufnahme einer die Fäkalien zumindest teilweise bindenden, insbesondere vorproportionierten, Substanz, insbesondere Katzenstreu (K_{S}) soll eine einfach aufgebaute beziehungsweise einfach aufbaubare Katzentoilette (3) mit verringerter Geruchsbelästigung und vereinfachter Entsorgung von benutzter Katzenstreu (K_{S}) bereitgestellt werden. Dies wird dadurch erreicht, dass die Katzentoilette (3) einen abschnittsweise angeformten oder anbringbaren Deckel (12) zum Abdecken der Wanne (11) umfasst und dass die Katzentoilette (3) derart ausgestaltet ist, dass die Wanne (11) und der Deckel (12) miteinander wiederverschliessbar sind zur Bildung einer verschlossenen, als gefüllte oder befüllbare Kapsel ausgestalteten Einwegkatzentoilette.

## Beschreibung

### Technisches Gebiet

Die vorliegende Erfindung betrifft eine Katzentoilette gemäss Oberbegriff des ersten Patentanspruches, eine Katzentoilettenvorrichtung für die Katzentoilette, ein System aus der Katzentoilette und der Katzentoilette sowie ein Verfahren zum Aufbau des Systems.

### Stand der Technik

Herkömmliche Katzentoiletten bestehen aus einer Wanne, welche mit Katzenstreu gefüllt sind. Solche Katzentoiletten haben den Nachteil, dass der Katzenhalter diese regelmässig mit grossem manuellem Aufwand reinigen muss. Im Weiteren ist nachteilig, dass während der Standzeit bis zur nächsten Reinigung eine unangenehme Geruchsbelästigung entsteht.

Bekannt ist im Weiteren aus DE 20 2005 012 471 U1 eine automatisierte Katzentoilette mit Spülung, welche den Reinigungsaufwand für den Katzenhalter verringert.

Diese bekannte Katzentoilette hat jedoch den Nachteil, dass ein hoher Wasserbedarf notwendig ist, was gleichzeitig zu einer komplizierten Konstruktion führt. Wie in DE 20 2005 012 471 U1 angeführt wird, muss eine Katze geradezu dazu erzogen oder allenfalls sogar Ängste abgebaut werden, die Katzentoilette richtig zu benutzen.

Im Weiteren ist aus DE 102 04 440 A1 eine Katzentoilette bekannt, bei welchem benutzte Katzenstreu mittels Förderband wegbefördert wird und das Förderband mit Wasser besprüht werden muss zum Entfernen von Fäkalien. Auch die Katzentoilette aus DE 102 04 440 A1 weist einen komplizierten Aufbau auf mit vielen notwendigen Komponenten wie beispielsweise eine Pumpe, Wasseranschluss etc.

Zudem haben die beiden bekannten Katzentoiletten den Nachteil, dass eine Entnahme und Entsorgung von benutzter Katzenstreu erschwert ist. Der komplizierte Aufbau der beiden bekannten Katzentoiletten führt zudem zu einer erschwerten Handhabung für den Katzenhalter und prinzipiell zu einer erhöhten Fehleranfälligkeit der Katzentoilette.

### Darstellung der Erfindung

Die vorliegende Erfindung hat sich zur Aufgabe gestellt, eine Katzentoilette bereitzustellen, welche die Nachteile des Stands der Technik überwindet und insbesondere eine einfach aufgebaute beziehungsweise einfach aufbaubare Katzentoilette mit verringerter Geruchsbelästigung und vereinfachter Entsorgung von benutzter Katzenstreu bereitzustellen.

Diese Aufgaben werden durch eine Katzentoilette mit den Merkmalen des unabhängigen Patentanspruches 1 gelöst.

Weitere vorteilhafte Ausgestaltungsformen sind in den abhängigen Patentansprüchen angegeben.

Die erfindungsgemässe Katzentoilette umfasst eine Wanne geeignet zur Aufnahme einer die Fäkalien zumindest teilweise bindenden, vorproportionierten Substanz, insbesondere Katzenstreu.

Erfindungsgemäss umfasst die Katzentoilette einen abschnittsweise angeformten oder anbringbaren Deckel zum Abdecken der Wanne und die Katzentoilette ist derart ausgestaltet, dass die Wanne und der Deckel miteinander wiederverschliessbar sind zur Bildung einer verschlossenen, als gefüllte oder befüllbare Kapsel ausgestalteten Einwegkatzentoilette.

Diese erfindungsgemässe Katzentoilette hat den Vorteil, dass benutzte Katzenstreu vereinfacht aufgrund der Ausgestaltung als wiederverschliessbare Kapsel geruchsdicht verschlossen entfernt werden kann. Zudem kann die erfindungsgemässe Katzentoilette ohne Wasser geruchsdicht verwendet werden. Im Weiteren kann die erfindungsgemässe Katzentoilette im Sinne einer Einwegkatzentoilette nach einer bestimmten Anzahl Benutzungen einfach ersetzt beziehungsweise entsorgt werden, wodurch sich eine Reinigung mit grossem manuellem Aufwand erübrigt.

Vorzugsweise sind die Wanne und der Deckel anhand eines form- und / oder kraftschlüssigen Klemmmechanismus miteinander wiederverschliessbar.

Alternativ oder zusätzlich zu einem solchen Klemmmechanismus ist es denkbar, dass die Wanne und der Deckel mittels Verschweissen miteinander wiederverschliessbar sind unter Ausbildung einer geruchsdicht verschliessenden Schweissnaht. Besonders bevorzugt sind die Wanne und der Deckel unter Erzeugung eine Vakuums mittels einer Vakuumiereinrichtung miteinander wiederverschliessbar. Dabei kann einerseits die Schliessposition zum Entsorgen der gebrauchten als Kapsel ausgestalteten Katzentoilette mittels Verschweissen erzielbar sein, während auch die Katzentoilette im ungebrauchten, verkaufsfertigen Zustand mit einer aufreissbaren, mittels Verschweissen erzielten Schweissnaht versehen sein kann.

Unter einem angeformten Deckel wird verstanden, dass der Deckel und die Wanne einstückig über Verbindungsstellen, z.B. ein Filmscharnier verbunden sein können. Im Sinne der vorliegenden Erfindung ist unter einer zur Aufnahme von Katzenstreu geeigneten Wanne der erfindungsgemässen Katzentoilette zu verstehen, dass die Wanne vor der Benutzung, insbesondere im verkaufsfertigen Zustand, leer, d.h. noch mit Katzenstreu zu befüllen ist, oder bereits mit einer geeigneten Menge Katzenstreu gefüllt sein kann. Der Kauf einer erfindungsgemässen Katzentoilette mit einer leeren Wanne ermöglicht es dem Kunden, die zu befüllende Menge Katzenstreu nach eigenem Ermessen einzustellen.

Herkömmliche Katzenstreu besteht meistens aus Tonmineralien wie beispielsweise Bentonit, Sepiolith, die durch die poröse Struktur sehr viel Feuchtigkeit aufnehmen können, jedoch üblicherweise nicht biologisch abbaubar sind. Vorzugsweise ist deshalb das im Zusammenhang mit der erfindungsgemässen Katzentoilette verwendete Katzenstreu aus vollständig biologisch abbaubaren organischen Materialien wie beispielsweise Holz oder Stroh. Diese Lösung ist besonders sinnvoll, wenn auch die Kapsel aus biologisch abbaubarem Kunststoff gefertigt ist.

Ein weiterer Aspekt der vorliegenden Erfindung betrifft eine Katzentoilettenvorrichtung für die erfindungsgemässe Katzentoilette, umfassend zumindest ein Katzentoilettengehäuse, wobei das Katzentoilettengehäuse derart ausgestaltet ist, dass die erfindungsgemässe, als Kapsel ausgestaltete Katzentoilette in das Katzentoilettengehäuse einführbar und die Katzentoilette darin betreibbar ist.

Eine derartige Katzentoilettenvorrichtung hat den Vorteil, dass anhand der Katzentoilettenvorrichtung eine autonom funktionierende Katzentoilette erzielt und wasserlos und mit verringerter Geruchsbelästigung betrieben werden kann.

Ein wiederum weiterer Aspekt der vorliegenden Erfindung betrifft ein System aus einer erfindungsgemässen Katzentoilette sowie einer erfindungsgemässen Katzentoilettenvorrichtung.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine schematische Vorderansicht der erfindungsgemässen Katzentoilettenvorrichtung bei geöffneter Katzentoilette
- Fig. 2: einen Querschnitt durch die erfindungsgemässe Katzentoilettenvorrichtung mit einer als Kapsel ausgestalteten, ersten Ausführungsform der Katzentoilette in einer zweiten Schliessstellung
- Fig. 3: einen Querschnitt durch eine erfindungsgemässe Katzentoilettenvorrichtung bei einer sich öffnenden Kapsel
- Fig. 3a: einen Querschnitt durch eine zweite Ausführungsform einer erfindungsgemässen Katzentoilette
- Fig. 3b: einen Querschnitt durch eine dritte Ausführungsform einer erfindungsgemässen Katzentoilette
- Fig. 4: eine schematische Vorderansicht der ersten Ausführungsform der erfindungsgemässen Katzentoilette für eine Katzentoilettenvorrichtung
- Fig. 5: eine schematische Vorderansicht einer vierten Ausführungsform der erfindungsgemässen Katzentoilette für eine Katzentoilettenvorrichtung mit verschwenkbarem Deckel
- Fig. 6: eine schematische Vorderansicht einer fünften Ausführungsform der erfindungsgemässen Katzentoilette mit Wanne und Deckel in zweiteiliger Ausgestaltung
- Fig. 7: eine schematische Vorderansicht der dritten Ausführungsform der erfindungsgemässen Katzentoilette verwendet in einer herkömmlichen Katzenkiste

### Beschreibung

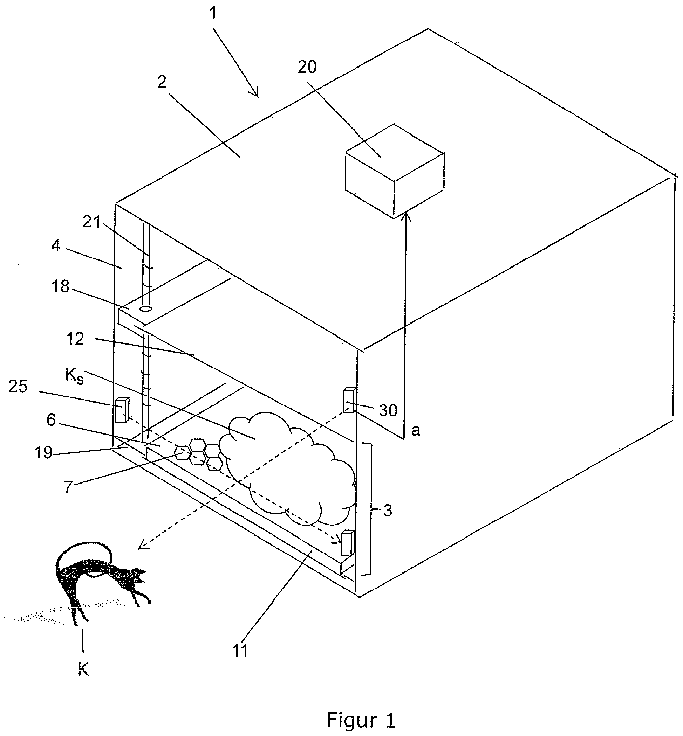

Fig. 1 zeigt eine perspektivische Vorderansicht der erfindungsgemässen Katzentoilettenvorrichtung 1 bei geöffneter Katzentoilette 3. Die Katzentoilette 3 umfasst einen Deckel 12 und eine Wanne 11, welche voneinander getrennt sind. Der Deckel 12 ist in eine erste Führungseinheit 18 der Katzentoilettenvorrichtung 1 und die Wanne 11 ist in eine Führungseinheit 19 eingeführt und gehalten.

Fig. 1 zeigt eine Katzentoilettenvorrichtung 1 mit einem quaderförmigen Katzentoilettengehäuse 2. Das Katzentoilettengehäuse 2 kann auch eine beliebig andere Form aufweisen wie beispielsweise würfelförmig, eiförmig etc.

Das quaderförmige Katzentoilettengehäuse 2 weist an einer Seitenfläche eine Öffnung 4 auf. Im Weiteren zeigt Fig. 1 einen nahe der Öffnung 4 der Katzentoilettenvorrichtung 1 angebrachten optischen Näherungsschalter 30. Zudem zeigt Fig. 1 eine im Katzentoilettengehäuse 2 rotierbar gelagerte Spindelstange 21, welche sich durch eine Durchgangsbohrung 22 der ersten Führungseinheit 18 erstreckt. Auf dem Katzentoilettengehäuse 2 ist ein, vorzugsweise geräuschsarmer, Schrittmotor 20 angeordnet, welcher mit der Spindelstange 21 in Wirkverbindung steht, wodurch die Spindelstange 21 antreibbar beziehungsweise in Rotation versetzbar ist.

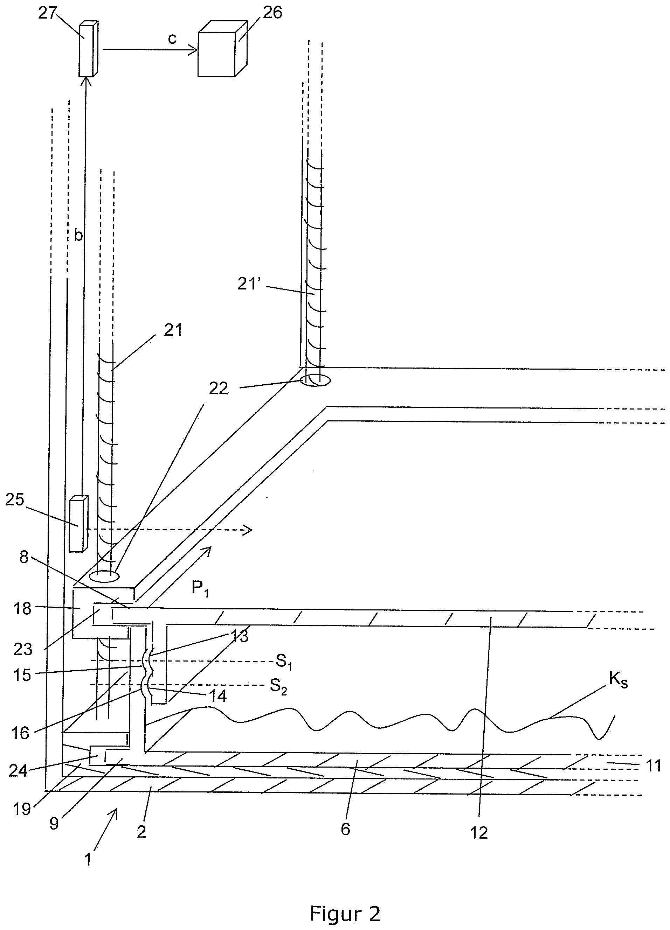

Der optische Näherungsschalter 30 ist derart mit dem Schrittmotor 20 gekoppelt, dass bei Annäherung einer Katze K und Erreichen einer voreinstellbaren Distanz zum optischen Näherungsschalter 30 unmittelbar über eine verdrahtete oder drahtlose Verbindung a oder mittelbar über eine in Fig. 2 gezeigte Steuereinheit der Schrittmotor 20 aktivierbar ist, wodurch - wie in Fig. 2 genauer erläutert - der Deckel 12 sich von der Wanne 11 abhebt beziehungsweise die Katzentoilette 3 sich öffnet und die Katze K auf dem Katzenstreu K_{S} sein Geschäft verrichten kann. Anhand einer Sensorschranke 25 ist die Benutzung der Katzentoilette 3 durch die Katze K registrierbar.

Zudem zeigt Fig. 1, dass der mit der Katzenstreu K_{S} im Kontakt stehende Boden 6 der Wanne 11 segmentiert ausgebildet ist beziehungsweise eine wabenartige Struktur 7 aufweist. Eine derartige Ausgestaltung der Wanne 11 ist insofern vorteilhaft, da zumindest teilweise ein übermässiges Verrutschen der Katzenstreu K_{S} und eine dabei resultierende, unerwünschte Gewichtsverlagerung beim Transport der verschlossenen Katzentoilette bzw. Katzentoiletten 3 beispielsweise nach dem Kauf verhindert wird. Alternativ zur Wabenstruktur 7 kann der Boden 6 der Wanne 11 mit in Reihen angeordneten, beispielsweise pyramidenförmigen Erhebungen ausgebildet sein, vorzugsweise versetzt zur jeweils nächsten Reihe.

Von hier an und im Folgenden bezeichnen gleiche Referenzzeichen gleiche Komponenten in den Figuren.

Fig. 2 zeigt einen Querschnitt durch die erfindungsgemässen Katzentoilettenvorrichtung 1 mit einer ersten Ausführungsform einer als Kapsel ausgestalteten Katzentoilette 3 in einer zweiten Schliessstellung S₂, in welcher eine erste Aussparung 15 und eine zweite Aussparung 16 an einer seitlichen Innenwand der Wanne 11 sowie korrespondierende erste Noppen 13 und zweite Noppen 14 des Deckels 12 ineinander greifen.

Wie in Fig. 2 ersichtlich ist die als Kapsel ausgestaltete Katzentoilette 3 und das Katzentoilettengehäuse 2 der Katzentoilettenvorrichtung 1 derart ausgestaltet, dass die verschlossene Katzentoilette 3 in das Katzentoilettengehäuse 2 in Pfeilrichtung P₁ einführbar ist. Der Deckel 12 der Katzentoilette 3 ist über eine erste Führungseinheit 18 und die Wanne 11 über eine zweite Führungseinheit 19 in das Katzentoilettengehäuse 2 einführbar. Hierzu ist an den Deckel 12 ein erster Führungsabschnitt 8 und an der Wanne 11 ein zweiter Führungsabschnitt 9 angeformt. Die erste Führungseinheit 18 weist eine erste Führungsrille 23 zur Aufnahme des ersten Führungsabschnitts 8 und die zweite Führungseinheit 19 weist eine zweite Führungsrille 24 zur Aufnahme des zweiten Führungsabschnitts 9 auf. Eine derartige Verwendung der als Kapsel ausgestalteten Katzentoilette 3 hat den zusätzlichen Vorteil, dass ein Öffnen und Verschliessen der als Kapsel ausgestalteten Katzentoilette 3 automatisiert zwischen den Benutzungen, d.h. auch bei Abwesenheit des Katzenhalters, erfolgen kann.

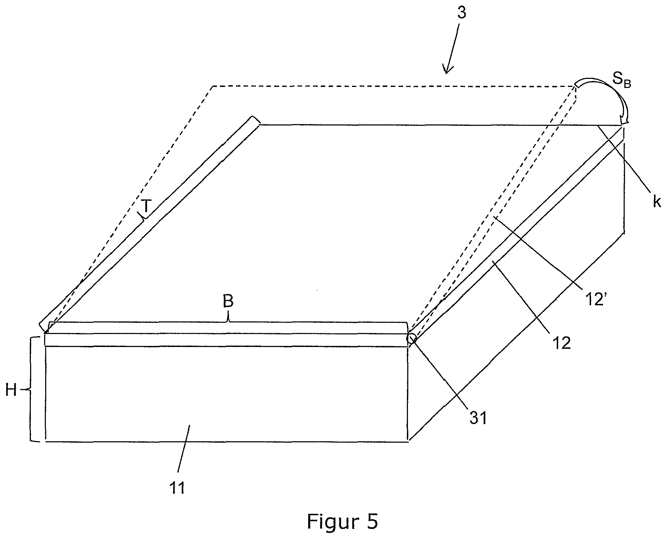

Bereits in einer ersten provisorischen Schliessposition S₁, in welcher nur die zweiten Noppen 14 in die zweite Aussparung 15 greifen, ist der Deckel 12 zur Wanne 11 bereits derart abdichtbar, dass vorteilhaft keine unangenehmen Düfte entweichen können, während die durch den Schrittmotor 20 zu überwindende Kraft sowie vorteilhaft der Energieaufwand für ein Verklemmen in die erste Schliessposition S₁ geringer ist als bei dem in Fig. 2 gezeigten Verklemmen in die zweite Schliessposition S₂, wobei in der zweiten Schliessposition S₂ sowohl die Noppen 14 in die Aussparung 16 als auch die Noppen 13 in die Aussparung 15 greifen. Die zweite Schliessposition S₂ entspricht auch dem Zustand der Katzentoilette 3 im Verkauf beziehungsweise während des Transports, wie in Fig. 5 gezeigt. Fig. 2 zeigt entweder eine noch ungebrauchte, erstmals in die Katzentoilettenvorrichtung 1 eingeführte Katzentoilette 3 oder eine nach der letzten Benutzung in die zweite Schliessposition S₂ gefahrene Katzentoilette 3, welche daraufhin aus der Katzentoilettenvorrichtung 1 in die der Pfeilrichtung P₁ entgegengesetzte Richtung herausgezogen und entsorgt werden kann. In der zweiten Schliessposition S₂ liegt der erste Führungsabschnitt 8 des Deckels 12 auf der Wanne 11 im Wesentlichen bündig auf. Die zweite Führungseinheit 19 ist gemäss Fig. 2 mit dem Katzentoilettengehäuse 2 fest fixiert, wobei alternativ die zweite Führungseinheit 19 an das Katzentoilettengehäuse 2 angeformt sein kann. Die erste Führungseinheit 18 ist nicht an das Katzentoilettengehäuse 2 angeformt beziehungsweise fixiert und wird durch Spindelstangen 21, 21' in Position gehalten. Vorzugsweise umfasst die Katzentoilettenvorrichtung 1 vier Spindelstangen 21.

Fig. 2 zeigt im Weiteren eine Steuereinheit 26, welche mit dem in Fig. 1 gezeigten Schrittmotor gekoppelt ist. Mittels eines geeigneten, gemäss Fig. 2 im Innenraum des Katzentoilettengehäuses 2 angeordnete Sensorschranke 25 ist die Benutzung der Katzentoilette 1 durch die Katze K registrierbar. Die Sensorschranke 25 kann über eine verdrahtete oder drahtlose Verbindung b mit einem Benutzungszähler 27 gekoppelt sein, welcher die Anzahl der Benutzungen der Katzentoilette 3 zählt. Der Benutzungszähler 27 kann wiederum über eine verdrahtete oder drahtlose Verbindung c mit einer Steuereinheit 26 gekoppelt sein, wobei anhand der Steuereinheit 26 die Anzahl der gewünschten Benutzungen der Katzentoilette 1 bis zum definitiven Verschliessen der Katzentoilette 3 in die zweite Schliessposition S₂ einstellbar ist und die gebrauchte Katzentoilette 3 durch eine neue ausgewechselt und geruchsfrei und sauber entsorgt werden kann.

Im Weiteren zeigt Fig. 2 eine an einer Seitenwand des Katzentoilettengehäuses 2 angeordnete Sprühvorrichtung 5, welche derart ausgestaltet ist, während des Verschliessens der Katzentoilette 3 ein Geruchsmittel oder einen Duftstoff in die Katzenstreu K_{S} wie auch die Umgebung zu versprühen.

Optional kann anstelle eines solchen Benutzungszählers 27 oder zusätzlich und einer gekoppelten Steuereinheit 26 ein manuell betätigbarer End-Verschlussknopf vorgesehen sein mit dem Vorteil, dass der Katzenhalter den Zeitpunkt des Wechsels der gebrauchten als Kapsel ausgestalteten Katzentoilette 3 selber und situativ bestimmen kann.

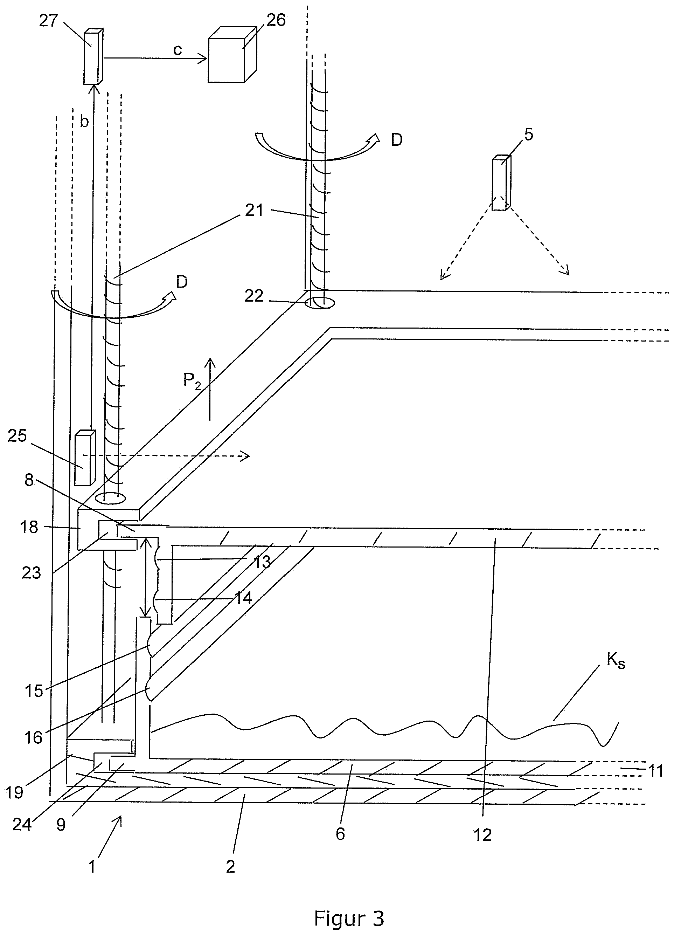

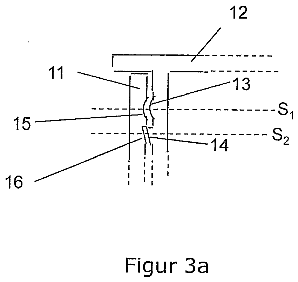

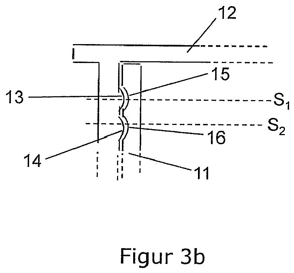

Fig. 3 zeigt einen Querschnitt durch eine erfindungsgemässe Katzentoilettenvorrichtung 1 bei einer sich öffnenden, erfindungsgemäss als Kapsel ausgestalteten Katzentoilette 3 in der Katzentoilettenvorrichtung 1.

Bei Aktivierung des Schrittmotors 20 werden die Spindelstangen 21 in eine Drehbewegung in Drehrichtung D versetzt. Über ein mit einem Gewinde der Spindelstangen 21 korrespondierendes Innengewinde in der Durchgangsbohrung 22 der Führungseinheit 18 ist die erste Führungseinheit 18 relativ zur zweiten Führungseinheit 19 beweglich in eine im Wesentlichen vertikal zur Fläche des Bodens 6 verlaufende Pfeilrichtung P₂. Die zweite, fest fixierte Führungseinheit 19 wirkt als Stoppelement auf den an die Wanne 11 angeformten, zweiten Führungsabschnitt 9, wodurch die Wanne 11 in Pfeilrichtung P₂ am Katzentoilettengehäuse 2 gehalten wird. Durch die resultierende relative Bewegung der ersten Führungseinheit 18 zur zweiten Führungseinheit 19 in Pfeilrichtung P₂ mittels Drehung der Spindelstangen 21 ist der Klemmmechanismus beziehungsweise Einrastmechanismus zwischen Deckel 12 und Wanne 11 überwindbar und der Deckel 12 wird von der Wanne 11 angehoben, wie in Fig. 3 gezeigt.

Fig. 3a zeigt einen Querschnitt durch eine zweite Variante einer erfindungsgemässen Katzentoilette 3, wobei die Aussparung 16 der Wanne 11 und die Noppen 14 des Deckels eckig ausgestaltet ist und dadurch ein besonders wirksamer transportierbarer, definitiver Verschluss in der zweiten Schliessposition S₂ zum Entsorgen der als Kapsel ausgestalteten Katzentoilette 3 erzielt wird. Im verkaufsfertigen Zustand ist hierbei der Deckel 12 zur Wanne 11 nur in der ersten Schliessposition S₁ gehalten und der Verschluss zusätzlich mittels eines zerstörbaren Erstöffnungsgarantieelements wie beispielsweise eines Garantiebands gesichert.

Fig. 3b zeigt eine dritte Ausführungsform der erfindungsgemässen Katzentoilettenvorrichtung, wobei - anders als in Fig. 2 gezeigt - die erste Aussparung 15 und eine zweite Aussparung 16 an einer seitlichen Aussenwand der Wanne 11 sowie korrespondierende, zum Innern der Wanne 11 gerichtete, erste Noppen 13 und zweite Noppen 14 des Deckels 12 ineinander greifen.

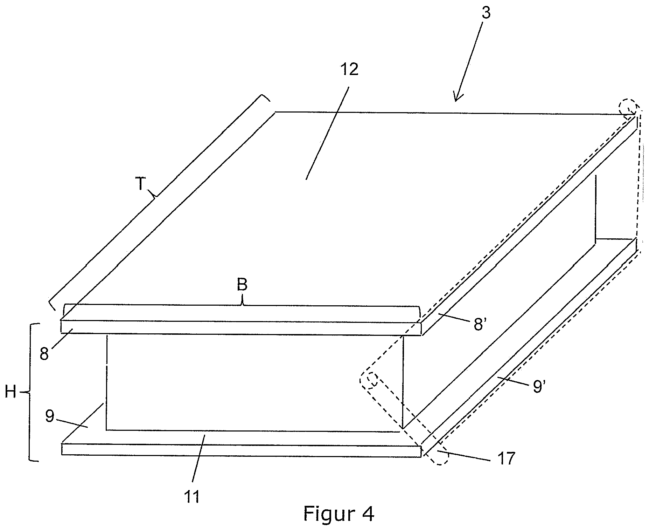

Fig. 4 zeigt die erste Ausführungsform einer erfindungsgemässen, als Kapsel ausgestalteten Katzentoilette 3 für eine Katzentoilettenvorrichtung 1 in einer zweiten Schliessposition S₂, wie die Katzentoilette 3 im Verkaufsregal bezogen werden kann. Die Katzentoilette 3 weist vorzugsweise eine Tiefe T von 50cm, eine Höhe H von 35cm bis 40cm sowie eine Breite B von 40cm auf. In der in Fig. 4 gezeigten, zweiten Schliessposition S₂ ist die erfindungsgemässe Katzentoilette 3 nicht nur geruchsdicht, sondern gleichzeitig transportierbar verschlossen, d.h. der Deckel 12 und die Wanne 11 sind ausreichend zueinander fixiert für einen üblichen Transport. An den Deckel 12 sind auf zwei gegenüberliegenden Seiten erste Führungsabschnitte 8, 8' und an der Wanne 11 auf zwei gegenüberliegenden Seiten zweite Führungsabschnitte 9, 9' angeformt.

Die zweite Schliessposition S₂ der Katzentoilette 3 entspricht zudem dem verkaufsfertigen Zustand, wobei jedoch im verkaufsfertigen Zustand die Wanne 11 und der Deckel 12 zusätzlich durch ein abziehbares, vorzugsweise wieder verschliessbares, Siegelband 17 zusammengehalten sein können, wie in Fig. 4 angedeutet ist. Das Siegelband 17 kann zudem einseitig beschreibbar sein. Im Verkaufsregal können zudem gleich mehrere, beispielsweise sechs, erfindungsgemässe Katzentoiletten 3 durch das Siegelband 17 zusammengehalten sein.

Fig. 5 zeigt eine schematische Vorderansicht einer vierten Ausführungsform der erfindungsgemässen Katzentoilette 3 für eine Katzentoilettenvorrichtung 1, wobei der Deckel 12 mittels eines abschnittsweise entlang der Breite B der Wanne 11 beziehungsweise des Deckels 12 angebrachten Scharnier 31 schwenkbar gelagert ist, wodurch der Deckel 12 und die Wanne 11 relativ zueinander in einer Schwenkbewegung S_{B} schwenkbar bis zu einer Schliesskante k. Vorzugsweise handelt es sich beim Scharnier 31 um ein Filmscharnier. Bei der Schliesskante k weist die Katzentoilette 3 einen wie in Fig. 2 gezeigten lösbaren Klemmmechanismus auf mittels Aussparungen und Noppen auf zur Bildung einer wiederverschliessbaren, als Kapsel ausgestalteten Katzentoilette 3. Im Weiteren ist in Fig. 5 ein Deckel 12' in einem ausgeschwenkten Zustand gestrichelt angedeutet. Vorzugsweise ist der Deckel 12 in mindestens einer Schwenkposition lösbar arretierbar, beispielsweise mittels eines in Fig. 5 nicht gezeigten Einrastmechanismus.

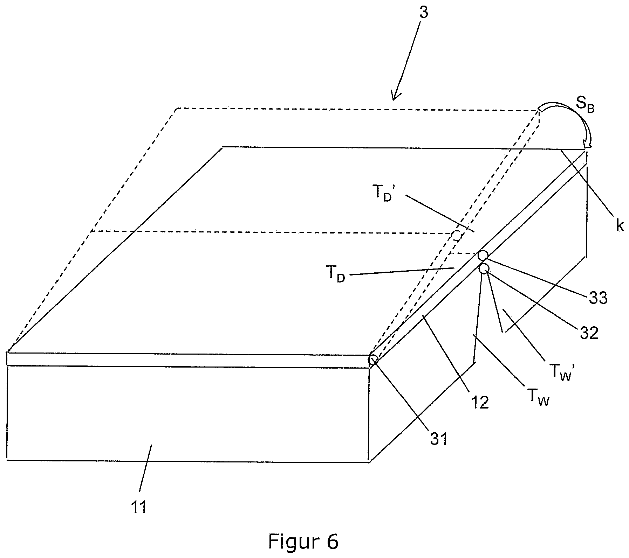

Fig. 6 zeigt eine schematische Vorderansicht einer fünften Ausführungsform der erfindungsgemässen Katzentoilette 3. Die Wanne 11 ist zweiteilig ausgestaltet und umfasst die Teilbereiche T_{W}, T_{W}', welche mittels eines Scharniers 32 vorzugsweise in Form eines Filmscharniers relativ zueinander schwenkbar gelagert sind. Der Deckel 12 ist zweiteilig ausgestaltet und umfasst die Teilbereiche T_{D}, T_{D}', welche mittels eines Scharniers 33 vorzugsweise in Form eines Filmscharniers relativ zueinander schwenkbar gelagert sind. Eine derart ausgestaltete Katzentoilette 3 hat den Vorteil, dass Wanne 11 und Deckel 12 in einer Ausdehnung verkürzt beziehungsweise platzsparend zusammengefaltet mit zueinander verschwenkten Teilbereichen im Verkauf angeboten werden kann.

Grundsätzlich ist es möglich, die erfindungsgemässe als wiederverschliessbare Kapsel ausgestaltete Katzentoilette 3 manuell ohne die erfindungsgemässe Katzentoilettenvorrichtung 1 zu verwenden. Vorzugsweise ist jedoch die erfindungsgemässe Katzentoilette 3 mit der erfindungsgemässen, in den Fig. 1 bis 3 gezeigten Katzentoilettenvorrichtung 1 betreibbar.

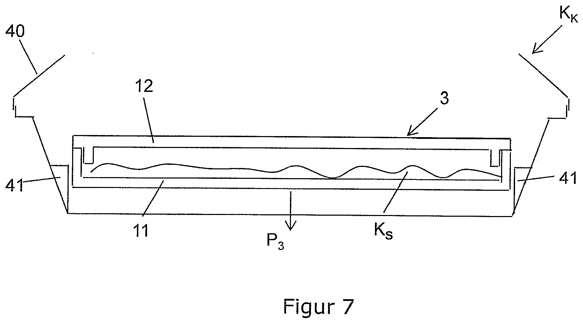

Im Weiteren kann die erfindungsgemässe Katzentoilette 3 in einer herkömmlichen Katzenkiste mit einem Spritzschutz 40 - wie in Fig. 7 gezeigt - verwendbar sein. Fig. 7 zeigt beispielshaft eine der ersten bevorzugten Ausführungsform der erfindungsgemässen Katzentoilette 3 vergleichbare Katzentoilette 3 ohne Führungsabschnitte. Dabei dient die Katzenkiste K_{K} vorteilhaft als Spritzschutz für die erfindungsgemässe Katzentoilette 3. Die Katzentoilette 3 ist unter Zuhilfenahme von Zentrierrippen 41 in die Katzenkiste K_{K} in Pfeilrichtung P₃ einführbar.

Zur Inbetriebnahme der Katzentoilettenvorrichtung 1 wird vorzugsweise die erste Ausführungsform der erfindungsgemässen, als Kapsel ausgestalteten Katzentoilette 3 nach Entfernen des Siegelbands 17 über die erste Führungseinheit 18 und die zweite Führungseinheit 19 in Pfeilrichtung P₁ in das Katzentoilettengehäuse 2 eingeführt. Durch anschliessende Betätigung eines Schalters wird die Katzentoilette 3 betriebsbereit gemacht.

Bei Annäherung der Katze K an die Katzentoilettenvorrichtung 1 und Registrierung der Katze mittels optischem Näherungsschalter 30 wird der Schrittmotor 20 aktiviert und die Katzentoilette 3 öffnet sich, so dass die Katze K auf dem Katzenstreu K_{S} sein Geschäft verrichten kann.

Nach verrichtetem Geschäft steigt die Katze K aus der Wanne 11 der als Kapsel ausgestalteten Katzentoilette 3 und verlässt die erfindungsgemässe Katzentoilettenvorrichtung 1. Die Sensorschranke 25 registriert das Verlassen und sendet unmittelbar über eine verdrahtete oder drahtlose Verbindunga oder mittelbar über die Steuereinheit 26 ein Signal an den mit der Sensorschranke 25 gekoppelten Schrittmotor 20, wobei zeitverzögert der Deckel 12 der Kapsel abgesenkt wird in eine erste geruchsdichte Schliessposition S₁ oder eine zweite Schliessposition S₂, in welcher die Kapsel transportierbar ist bzw. der Deckel 12 und die Wanne 11 zueinander transportierbar gesichert beziehungsweise verschliessbar sind. Im Sinne der vorliegenden Erfindung wird unter einem transportierbaren Verschliessen von Deckel 12 und Wanne 11 verstanden, dass bei alleinigem Halten des Deckels 12 das Eigengewicht der mit Katzenstreu befüllten und im Entsorgungszustand zusätzlich mit Fäkalien verunreinigten Wanne 11 nicht genügt, den Klemmmechanismus beziehungsweise Einrastmechanismus zu überwinden.

Während dem zeitverzögerten Absenken oder gleichzeitig mit dem Absenken des Deckels 12 wird vorzugsweise automatisiert mittels der Sprühvorrichtung 5 ein Geruchsmittel beziehungsweise Duftstoff in die Katzenstreu K_{S} gesprüht.

Alternativ zu einem Schrittmotor 20 sowie mit dem Schrittmotor 20 in Wirkverbindung stehenden Spindelstangen 21 ist die Verwendung eines Liftrollen-Mechanismus denkbar. Im Weiteren ist es denkbar, zusätzlich an der ersten Führungseinheit 19 einen Elektromagnet und an der zweiten Führungseinheit 18 einen Gegenmagnet anzubringen, oder umgekehrt, um ein Verklemmen oder Einrasten von Deckel 12 und Wanne 11 in die erste Schliessposition S₁ und / oder zweite Schliessposition S₂ zu unterstützen.

Alternativ zur Verwendung eines Näherungssensors wie z.B. einen optischen Näherungsschalter 30 ist es beispielsweise denkbar, eine Sensormatte zu verwenden.

Vorzugsweise ist die erfindungsgemässe Kapsel recyclierbar oder kompostierbar.

Die erste geruchsdicht verschliessende Schliessposition S₁ und die zweite, transportierbar verschliessende Schliessposition S2 können eine einzige Position sein. Mit anderen Worten kann die erfindungsgemässe Katzentoilette 3 einzig durch eine zweite, transportierbar ausgestaltete Schliessposition S2 ausgestaltet sein. Im Falle einer solchen einzigen Schliessposition S2 zum Entsorgen der gebrauchten als Kapsel ausgestalteten Katzentoilette 3 ist es alternativ zu einem Klemmmechanismus denkbar, dass die Wanne 11 und der Deckel 12 mittels Verschweissen miteinander wiederverschliessbar unter Ausbildung einer geruchsdicht verschliessenden Schweissnaht. Besonders bevorzugt sind die Wanne 11 und der Deckel 12 unter Erzeugung eines Vakuums mittels einer Vakuumiereinrichtung miteinander wiederverschliessbar. Bevorzugt umfasst in diesem Fall die erfindungsgemässe Katzentoilettenvorrichtung 1 eine hier nicht in den Figuren gezeigte, geeignet angeordnete Vakuumiereinrichtung.

### Bezugszeichenliste

- 1: Katzentoilettenvorrichtung
- 2: Katzentoilettengehäuse
- 3: Katzentoilette
- 4: Öffnung
- 5: Sprühvorrichtung
- 6: Boden
- 7: Wabenstruktur
- 8: erster Führungsabschnitt
- 9: zweiter Führungsabschnitt
- 11: Wanne
- 12: Deckel
- 13: erste Noppen
- 14: zweite Noppen
- 15: erste Aussparung
- 16: zweite Aussparung
- 17: Siegelband
- 18: erste Führungseinheit
- 19: zweite Führungseinheit
- 20: Schrittmotor
- 21: Spindelstange
- 22: Durchgangsbohrung
- 23: erste Führungsrille
- 24: zweite Führungsrille
- 25: Sensorschranke
- 26: Steuereinheit
- 27: Benutzungszähler
- 30: Optischer Näherungsschalter
- 31: Scharnier
- 32: Scharnier
- 33: Scharnier
- 40: Spritzschutz
- 41: Zentrierrippe
- a: Verbindung
- b: Verbindung
- c: Verbindung
- k: Schliesskante
- B: Breite
- H: Höhe
- K: Katze
- K_{K}: Katzenkiste
- K_{S}: Katzenstreu
- P₁: Pfeilrichtung
- P₂: Pfeilrichtung
- P₃: Pfeilrichtung
- S₁: erste Schliessposition
- S₂: zweite Schliessposition
- S_{B}: Schwenkbewegung
- T: Tiefe
- T_{W}: Teilbereich Wanne
- T_{D}: Teilbereich Deckel

## Patentansprüche

1. Katzentoilette (3), umfassend zumindest:
eine Wanne (11) geeignet zur Aufnahme einer die Fäkalien zumindest teilweise bindenden, insbesondere vorproportionierten Substanz, insbesondere Katzenstreu (K_{S});
**dadurch gekennzeichnet, dass**
die Katzentoilette (3) einen angeformten oder anbringbaren Deckel (12) zum Abdecken der Wanne (11) umfasst und dass die Katzentoilette (3) derart ausgestaltet ist, dass die Wanne (11) und der Deckel (12) miteinander wiederverschliessbar sind zur Bildung einer verschlossenen, als gefüllte oder befüllbare Kapsel ausgestalteten Einwegkatzentoilette.

2. Katzentoilette (3) nach Anspruch 1,
**dadurch gekennzeichnet, dass**
die Wanne (11) und der Deckel (12) anhand eines form- und / oder kraftschlüssigen Klemmmechanismus miteinander wiederverschliessbar sind.

3. Katzentoilette (3) nach Anspruch 1 oder 2,
**dadurch gekennzeichnet, dass**
die Wanne (11) und der Deckel (12) in einer ersten Schliessposition (S₁) geruchsdicht wiederverschliessbar sind..

4. Katzentoilette (3) nach einem der vorherigen Ansprüche,
**dadurch gekennzeichnet, dass** die Wanne (11) und der Deckel (12) in einer zweiten Schliessposition (S₂) gesichert transportierbar sind.

5. Katzentoilette (3) nach Anspruch3,
**dadurch gekennzeichnet, dass**
in der ersten Schliessposition (S₁) der Deckel (12) mit der Wanne (11) mittels einem zerstörbaren Erstöffnungsgarantieelement verschlossen gehalten ist.

6. Katzentoilette (3) nach einem der vorherigen Ansprüche,
**dadurch gekennzeichnet, dass**
der Deckel (12) an der Wanne (11) zumindest abschnittsweise derart schwenkbar lagerbar oder gelagert ist, so dass der Deckel (12) und die Wanne (11) relativ zueinander schwenkbeweglich sind und der Deckel (12) und die Wanne (11) und wiederverschliessbar sind.

7. Katzentoilette (3) nach Anspruch 6,
**dadurch gekennzeichnet, dass**
die Wanne (11) und der Deckel (12) aus jeweils mindestens zwei flächengleichen Teilbereichen bestehen, wobei die jeweiligen Teilbereiche (T_{W}, T_{W}') der Wanne (11) und / oder die jeweiligen Teile (T_{D}, T_{D}') des Deckels (12) relativ zueinander schwenkbar verbunden sind.

8. Katzentoilette (3) nach einem der vorherigen Ansprüche,
**dadurch gekennzeichnet, dass**
der mit der Katzenstreu (K_{S}) im Kontakt stehende Boden (6) der Wanne (11) segmentiert ausgebildet ist vorzugsweise anhand einer Wabenstruktur (7).

9. Katzentoilettenvorrichtung (1) für eine Katzentoilette (3) nach einem der Ansprüche 1 bis 5, umfassend zumindest ein Katzentoilettengehäuse (2),
**dadurch gekennzeichnet, dass**
die Katzentoilettenvorrichtung (2) derart ausgestaltet ist, dass die als Kapsel ausgestaltete Katzentoilette (3) in das Katzentoilettengehäuse (2) einführbar und die Katzentoilette (3) darin betreibbar ist.

10. Katzentoilettenvorrichtung (1) nach Anspruch 9,
**dadurch gekennzeichnet, dass**
der Deckel (12) über eine erste Führungseinheit (18) und die Wanne (11) über eine zweite Führungseinheit (19) in das Katzentoilettengehäuse (2) einführbar ist.

11. Katzentoilettenvorrichtung (1) nach Anspruch 9 oder 10,
**dadurch gekennzeichnet, dass**
die erste Führungseinheit (18) relativ zur zweiten Führungseinheit (19) beweglich ausgestaltet ist,
wobei die zweite Führungseinheit (19) am Katzentoilettengehäuse (2) fest fixiert ist,
so dass der Deckel (12) in einem in die erste Führungseinheit (18) eingeführten Zustand relativ zur Wanne (11) in einem in die zweite Führungseinheit (19) eingeführten Zustand beweglich ist.

12. Katzentoilettenvorrichtung (1) nach einem der Ansprüche 9 bis 11,
**dadurch gekennzeichnet, dass**
die Katzentoilette (3) einen Antriebsmotor sowie mindestens eine, vorzugsweise vier mit dem Antriebsmotor in Wirkverbindung stehende, Spindelstangen (21) umfasst,
wobei jeweils eine Spindelstange (21) mit jeweils einem zugehörigen Innengewinde in der ersten Führungseinheit (18) in Wirkverbindung steht, so dass der Deckel (12) relativ zur Wanne (11) beweglich ist.

13. Katzentoilettenvorrichtung (1) nach Anspruch 12,
**dadurch gekennzeichnet, dass**
der Antriebsmotor als Schrittmotor (20) ausgebildet ist.

14. Katzentoilettenvorrichtung (1) nach Anspruch 13,
**dadurch gekennzeichnet, dass**
der Schrittmotor (20) und die Spindelstangen (21) derart ausgestaltet sind, den Klemmmechanismus oder Einrastmechanismus zwischen Deckel (12) und Wanne (11) der Katzentoilette (3) aus oder in eine erste Schliessposition (S₁) oder zweite Schliessposition (S₂) zu überwinden in der Lage ist, so dass der Deckel (12) und die Wanne (11) verschliessbar oder zum Öffnen voneinander trennbar sind.

15. Katzentoilettenvorrichtung (1) nach Anspruch 9 bis 14,
**dadurch gekennzeichnet, dass** die Katzentoilettenvorrichtung (1) eine Sensorschranke (25) zum Erkennen der Anwesenheit einer Katze K in unmittelbarer Nähe zur Katzentoilette (3) umfasst, wobei die Sensorschranke (25) mit dem Schrittmotor (20) derart gekoppelt ist, so dass ein Verlassen des Innenraums der Katzentoilettenvorrichtung (1) der vorgängig anwesenden Katze K registrierbar und, insbesondere zeitverzögert, der Antriebsmotor, insbesondere der Schrittmotor (20), aktivierbar ist, um die Katzentoilette (3) zu schliessen.

16. Katzentoilettenvorrichtung (1) nach Anspruch 15,
**dadurch gekennzeichnet, dass** die Katzentoilettenvorrichtung (1) mit einem mit der Sensorschranke (25) gekoppelten Benutzungszähler (27) zum Zählen der Anzahl Benutzungen der Katzentoilette (3) sowie eine mit dem Benutzungszähler (27) gekoppelte Steuereinheit (26) umfasst, wobei anhand der Steuereinheit (26) die Anzahl der gewünschten Benutzungen der Katzentoilette (3) bis zu einem Verschliessen in eine zweite, transportierbar verschlossene Schliessstellung S₂ zur Entsorgung der Katzentoilette (3) einstellbar ist.

17. Katzentoilettenvorrichtung (1) nach einem der Ansprüche 9 bis 16,
**dadurch gekennzeichnet, dass** die Katzentoilettenvorrichtung (1) eine Sensormatte oder einen Näherungssensor (30) umfasst, wobei die Sensormatte oder der Näherungssensor (30) mit dem Schrittmotor (20) derart gekoppelt ist, so dass der Antriebsmotor, insbesondere der Schrittmotor (20), anhand eines Signals von der Sensormatte oder des Näherungssensors (30) aktivierbar ist, um die Katzentoilette (3) zu öffnen.

18. Katzentoilettenvorrichtung (1) nach einem der Ansprüche 9 bis 17, **dadurch gekennzeichnet, dass** an einer Seitenwand des Katzentoilettengehäuses (2) eine Sprühvorrichtung (5) angeordnet ist, welche derart ausgestaltet ist, um während des Verschliessens der Katzentoilette (3) ein Geruchsmittel oder einen Duftstoff in die Katzenstreu K_{S} und die Umgebung zu versprühen.

19. System aus einer Katzentoilette (3) nach einem der Ansprüche 1 bis 8 sowie einer Katzentoilettenvorrichtung (1) nach einem der Ansprüche 9 bis 18.

20. Verwendung einer Katzentoilette (3) nach einem der Ansprüche 1 bis 8 in einer Katzenkiste (K_{K}) mit einem Spritzschutz (40).
